Europäisches Patentamt

European Patent Office

Office européen des brevets

(11) Publication number: **0 154 388**
**A1**

(12) **EUROPEAN PATENT APPLICATION**

(21) Application number: **85300234.3**

(22) Date of filing: **14.01.85**

(51) Int. Cl.⁴: **B 62 D 5/30**
**B 62 D 5/24**

(30) Priority: **06.02.84 GB 8403075**

(43) Date of publication of application:
**11.09.85 Bulletin 85/37**

(84) Designated Contracting States:
**DE FR IT SE**

(71) Applicant: **TRW CAM GEARS LIMITED**
**45 Wilbury Way**
**Hitchin Hertfordshire, SG4 OtU(GB)**

(72) Inventor: **Adams, Frederick John**
**Pelba 27 Princes Road**
**Clevedon Avon(GB)**

(74) Representative: **Walters, Frederick James et al,**
**Urquhart-Dykes & Lord 47 Marylebone Lane**
**London W1M 6DL(GB)**

(54) A power assisted steering assembly.

㊻ A power assisted steering assembly (1) for a motor
vehicle steering system having two power assistance
motors, one motor (7), (8), (9) being in the assembly (1) and
the other motor (13) being coupled to a steering linkage
incorporating an output (12) from the assembly.

Valve means having a rotor (19) and one piece sleeve
(20) includes two sets of ports which are simultaneously
adjustable to control fluid flow from hydraulic circuits (23),
(24) and (25), (26) to the respective motors (7), (8), (9) and (13)
for power assistance. The rotor (19) provides a steering input
and rotates a worm shaft (6) through a torque rod (15). The
worm shaft carries a piston nut (7) displacement of which
provides a steering output with power assistance. The worm
shaft has a bell shaped end (22) by which it is coupled for
rotation with the one piece sleeve (20). The sleeve (20) is
located within the axial thickness of the end wall (5) of the
piston nut cylinder (3) and has a diameter greater than that of
the worm thread on the shaft (6). The location of the sleeve
(20) in the end wall (5) permits the worm shaft to have a
relatively reduced diameter so that the pressurised areas of
the piston nut in the chambers (8) and (9) (and as determined
by the diameter of the worm thread and diameter of the
cylinder (3)) can be relatively large.

./...

Croydon Printing Company Ltd.

- 1 -

## TITLE

"A power assisted steering assembly"

## TECHNICAL FIELD AND BACKGROUND ART

This invention relates to a power assisted steering assembly for a motor vehicle steering system and is particularly concerned with steering systems having two hydraulically operated power assistance motors one of which is incorporated in the power assisted steering assembly. In power steering systems for motor vehicles, particularly heavy goods vehicles, it is well known to duplicate the power assistance facility so that, in the event of failure of one power assistance motor and its associated hydraulic circuit, a secondary motor and circuit may provide adequate power assistance to ensure safe manoeuvrability of the vehicle or, if one power assistance circuit is considered adequate for normal steering requirements, an auxilliary power assisted unit can become operative should additional assistance be required as, for example, during parking manoeuvres. Examples of such steering assemblies and systems are to be found in U.S. Patent No. 3,822,759 and G.B. Patent No. 2,049,585. A generally accepted form of steering assembly for incorporation in a steering system having two hydraulically operated power assistance motors is that the assembly itself incorporates one of the power assistance motors and incorporates valve means which controls fluid flow to the motor in that assembly and is intended to be appropriately connected to control fluid flow to the second power assistance motor when the assembly is installed in the steering system. A preferred structure for the power assistance motor in the steering assembly (particularly but not essentially for heavy steering duties and as disclosed in G.B. 2,049,585) has a worm shaft extending axially between opposed end walls of a piston cylinder and a piston nut engaging the worm shaft in the cylinder to be driven axially by rotation of the shaft and so that it forms with the cylinder opposed piston chambers to which fluid flow is controlled by the valve means. The worm shaft is coupled through torsionally responsive means to an input shaft mounted in one of the end walls to be rotatable in response to rotation of the input shaft. In such an arrangement it is known for the valve means to comprise an axially extending array of valve sleeves which are coupled to each other and for rotation with the worm shaft while a valve rotor on the input shaft is received within the valve sleeves to be rotatable relative thereto and to an extent determined by the torsionally responsive means to effect rotation of the worm shaft while causing adjustment in the opening and closing of ports between the valve sleeves and the rotor - it is this adjustment which controls the flow of fluid to the two power assistance motors.

The usual requirements for a power assisted steering assembly such as safety, reliability, and efficient steering characteristics are well known. However, without detriment to the aforegoing, it is an ever increasing requirement that steering assemblies should be compact so that they can be installed in a relatively small space in a motor vehicle and that such compactness should be achieved without substantial loss of available power, and should be constructed from a minimum number of components which are readily machined and assembled and be capable of a long working life without substantial deterioration in efficiency. In an attempt to achieve compactness, the assembly in G.B. 2,049,585 has its axial length reduced by locating the valve means within a tubular part of the worm shaft extending into the piston cylinder; the consequence of this is that the necessary increase in diameter of the worm shaft reduces the effective pressurised areas which are available on the end faces of the piston nut and compactness is achieved at the expense of a loss in power available from the motor; furthermore, the axial extent of the several sleeves required for forming the discrete valves with which to control operation of the two power assistance motors is considerable and the machining of the necessary ports and passages in the individual valve sleeves and the assembly of these sleeves is a substantial part of the overall cost of the steering assembly.   Also the coupling between the several valve sleeves and the necessary alignment of these sleeves with each other and relative to the rotor can lead to imprecise control of fluid flow through the valve means after a relatively short working life as the couplings wear in use.

It is an object of the present invention to provide a power assisted steering assembly of the kind discussed above and by which the aforementioned desirable characteristics can be achieved while alleviating the disadvantages of the prior proposals.

STATEMENT   OF   INVENTION   AND   ADVANTAGES

According to the present invention there is provided a power assisted steering assembly for a motor vehicle steering system having two hydraulically operated power assistance motors and which assembly comprises one of said power assistance motors;   valve means controlling fluid flow to said one power assistance motor and for connection to control fluid flow to the second power assistance motor when the assembly is installed in the steering system, the valve means having two sets of simultaneously adjustable ports with the ports in one set controlling fluid flow to control the power assistance provided from the one power assistance motor and the ports in the second set controlling the power assistance which is to be provided by the second power assistance motor; said one power assistance motor comprising a worm shaft extending axially between opposed end walls of a piston cylinder and a piston nut engaging said worm shaft in the cylinder to be driven axially by rotation of the shaft and forming with the cylinder opposed piston chambers to which fluid flow is controlled for power assistance by said one set of ports; said worm shaft being coupled through torsionally responsive means to an input shaft mounted in one of said end walls to be rotatable in response to rotation of the input shaft; and wherein the valve means has a one piece valve sleeve which is accommodated within the axial thickness of said one end wall and

is coupled for rotation with the worm shaft, a valve rotor which is formed as a part of said input shaft and is received within the valve sleeve to be rotatable relative thereto to an extent determined by the torsionally responsive means, and the ports of said two sets are formed in the valve sleeve and in the rotor.

By the present invention the valve means by which fluid flow to both power assistance motors is controlled comprises a one piece sleeve which is located wholly within the axial thickness of one end wall of the piston cylinder. This valve sleeve must be of sufficient internal diameter to accommodate the valve rotor but its location within the thickness of the end wall permits a worm shaft of relatively reduced diameter to be coupled to the valve sleeve without substantial intrusion of this coupling into the piston cylinder. Accordingly, the piston nut can engage with a relatively small diameter worm shaft to be driven substantially over the whole axial length of the piston cylinder and relatively large pressure areas are available on the end faces of the piston so that a relatively high power can be achieved for the motor relative to the diameter of the piston cylinder. ; The torsionally responsive means between the input shaft and worm shaft will usually be in the form of an axially extending torsion rod located within a bore of the worm shaft and connected at one end for rotation with the worm shaft and at the other end for rotation with the input shaft; the provision of such a bore will call for a larger diameter worm shaft than that which may otherwise be necessary but even so the diameter of the worm shaft can be considerably less than that which would be necessary for the bore of the worm shaft to accommodate the valve sleeves and rotor. It will be appreciated that torsionally responsive means other than a torque rod can be provided to alleviate the requirement for a tubular worm shaft, for example as disclosed in our G.B. Specification No. 1,603,198. To alleviate the requirement for unnecessarily increasing the diameter of the worm shaft it is preferred that the rotor and input shaft do not project axially into the piston cylinder but if such projection occurs, as may be for convenience of design, it is desirable that the diametral enlargement of the worm shaft as may be necessary in the piston cylinder has an axial extent which can be accommodated within a complementary recess in the adjacent end face of the piston nut without adversely affecting the desired stroke of the piston.

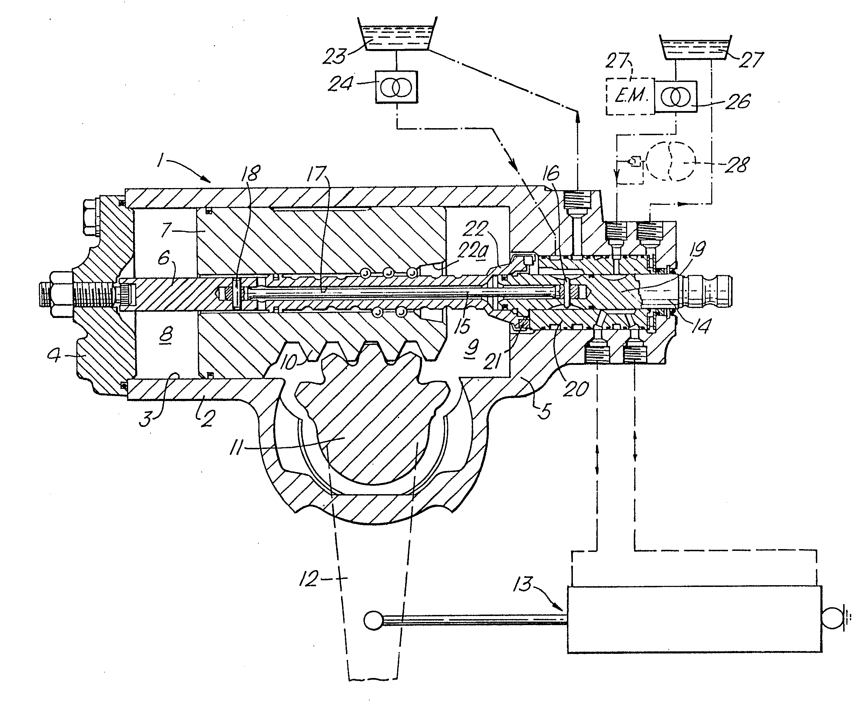

Preferably the valve means consists of the one piece valve sleeve and the rotor which it receives. With such a one piece valve sleeve the apertures, passages, grooves and recesses as may be required for the ports both internally and externally of the sleeve for the respective two sets can be formed by a single process without any difficulties of alignment between the ports and the respective sets (particularly when the valve sleeve is assembled with the rotor which would also have the appropriate ports for the respective two sets formed therein). Since the invention avoids the necessity of coupling together an array of valve sleeves it will be appreciated that the single valve sleeve may be axially compact as compared with the plural sleeve arrangement and a steering assembly constructed in accordance with the present invention may have substantially the same overall size as that shown in Figure 1 of G.B. 2,049,585 but provide a substantially more powerful motor, be less expensive to manufacture and assemble and maintain its accuracy for a longer working life. While the assembly shown in Figure 1 of 2,049.585 is intended to be convertible for use with different rotors and valve sleeves to control only the power assistance motor it incorporates or to control both that motor and an auxilliary power assistance motor, it is believe that the facility which the present invention provides for improved machining and assembly of the valve means and the cost reduction which is achieved thereby may justify use of the present invention in circumstances where there is no requirement for the second power assistance motor in the steering system.

Further according to the present invention there is provided a motor vehicle steering system which incorporates a power assisted steering assembly as previously specified as being in accordance with the invention and comprising fluid pressure supply means to said valve means; a steering output member connected with the piston nut and displaceable in response to displacement of that nut to effect movement of a steering linkage, and a second power assistance motor coupled to assist in movement of the steering linkage, said second motor having fluid flow thereto controlled for power assistance by the second set of ports in the valve means.

It is to be realised that, in the context of the present invention, the term "one-piece" or "single" as applied to the valve sleeve is intended to include the manufacture of the sleeve from two or more components which are rigidly connected to each other as by friction welding, brazing or the like to form an integral structure.

- 12 -

DRAWING

One embodiment of a motor vehicle steering system incorporating a power assisted steering assembly constructed in accordance with the present invention will now be described, by way of example only, with reference to the accompanying illustrative drawing which shows an axial section through the steering assembly and schematically illustrates the parts associated with the assembly for the steering system.

DETAILED DESCRIPTION OF DRAWING

The steering system illustrated is primarily intended for heavy duty vehicles and includes a power assisted steering assembly 1 having a housing 2 within which is formed a piston cylinder 3. Co-axial with the cylinder 3 and extending therethrough between axially opposed end walls 4 and 5 is a worm shaft 6. In driving engagement with the worm shaft 6 through a re-circulating ball system is a piston nut 7 which is driven axially in response to rotation of the shaft 6. The nut 7 forms with the cylinder 3 opposed piston chambers 8 and 9 to and from which hydraulic fluid is to be directed to assist in displacing the piston 7 as a power assistance motor in conventional manner. The piston 7 has a rack 10 which drivingly engages a toothed sector 11 which sector is coupled to a drop arm 12 and provides an output from the assembly. The arm 12 forms part of a steering linkage which is to be displaced in response to a steering manoeuvre - again in conventional manner. Coupled between the drop arm 12 and the vehicle chassis is a second power assistance motor 13 comprising a ram having opposed piston chambers to and from which fluid under pressure is to be directed to assist in the displacement of the steering linkage.

The assembly 1 has an input shaft 14 which is rotated in response to a steering manoeuvre and is coupled to the worm shaft 6. This coupling is by means of a torsion rod 15 which is pinned at one end 16 for rotation with the input shaft and extends through a bore 17 in the worm shaft 6 to which it is pinned at its other end 18. The input shaft 14 has an axial part length thereof machined as a valve rotor 19 which is rotatably borne in the housing 2 within a one piece valve sleeve 20. The valve sleeve 20 is coupled at 21 to the adjacent end of the worm shaft 6 for rotation therewith. For the purpose of this coupling the end of the worm shaft is diametrically enlarged (relative to the diameter of the worm thread) to provide a bell shaped mouth 22 which can accommodate the inner end of the input shaft 14 and extends to a small extent axially into the cylinder 3. The valve sleeve 20 is accommodated within the axial thickness of the end wall 5 and this valve sleeve together with the valve rotor 19 constitutes a valve unit by which hydraulic fluid is to be directed to and from the piston chambers 8, 9 of the first power assistance motor and independently to the piston chambers of the second power assistance motor 13 to determine the power assistance provided for a steering manoeuvre.  For this purpose the rotor 19 and sleeve 20 are provided with appropriate

apertures, axially extending grooves or recesses, passages, scalloped grooves or  the like both in the internal and external cylindrical surfaces of the sleeve and in the external surface of the rotor 19 to provide two sets of control ports, one set of these ports controls fluid flow to and from the piston chambers 8 and 9 from an hydraulic system comprising a reservoir 23 and a pump 24 and the other set controls   fluid flow to and from the power assistance motor 13 from an hydraulic system comprising a reservoir 25 and a pump 26.   Fluid communication between the valve sleeve 20 and the respective hydraulic systems and motor 13 is achieved in conventional manner by way of annular recesses in the external surface of the sleeve which are in constant communication with        respective inlet
and outlet ports in the housing 2.  The recesses in the sleeve
can be formed in conventional manner as can the
other passages, apertures, channels, or the like,
where it will be appreciated that the ports, once formed in
the sleeve will be at a constant and predetermined
orientation and position relative to each other.
Similarly the recesses, passages, flats or the like on the
rotor 19 can be formed by conventional means and
again these ports once formed will be at a fixed
orientation and position relative to each other.
During rotation of the input shaft 14 in response to
a steering manoeuvre it will be realised that a
resistance to rotation of the worm shaft 6 to
displace the piston nut 7 will result in the rotor
19 rotating, by virtue of the torsion rod 15,
relative to the shaft 6 and thereby to the valve
sleeve 20.  This relative rotation between the
valve sleeve and rotor serves to control the opening
and closing of the ports in the two sets to permit
fluid flow to and from the respective piston chambers
to impart power assistance from the two motors to assist in the steering manoeuvre which is intended by rotation of the input shaft 14 - generally in accordance with conventional practice.

When the valve is assembled during construction of the steering assembly, it is necessary to correctly orientate and set the valve sleeve rotationally relative to the valve rotor in a neutral condition so that the required control characteristics of the two valves which are effectively formed by the two sets of control ports (and as predetermined by the design and positioning of those control ports) will be provided. It will be appreciated that the control ports in the two sets will be adjusted simultaneously during relative rotation between the valve sleeve and the rotor. The simultaneous adjustment of the two sets of ports may result in simultaneous operation of the two power assistance motors or may cause the two motors to become operative sequentially so that, for example, the servo-motor 13 may be actuated only if a heavy and predetermined resistance to steering is encountered. The two sets of ports being disposed axially in tandem relative to each other permits those ports to be formed by convenient machining processes so that the two valves which are effectively formed by the two sets can have independent and different characteristics which, once having been determined, will remain constant. With this in mind one set of ports, for example that which controls the piston chambers 8 and 9 may provide open centre/open return characteristics while the second set of ports, for the servo motor 13 may provide closed centre/open return characteristics as is well known in the art. In view of these different characteristics which can be provided for the two sets of ports it will be realised that the hydraulic circuits associated with the respective sets are not necessarily the same. For example rather than having both pumps 24 and 26 driven from the vehicle engine, the pump 26 (if associated with a closed centre set of ports) may be driven from the vehicle transmission or by an electric motor 27 and its hydraulic circuit include an accumulator 28 to conserve power (with this proposal a fairly small electric pump may be used to "top-up" the accumulator which will be sufficient to satisfy any sudden large demands for power).

It will be apparent from the drawing that the location of the valve sleeve 20 wholly within the axial thickness of the wall 5 (and also of the input shaft 14 substantially within this wall thickness so that it does not extend predominantly into the cylinder 3) permits the use of a small diameter worm shaft 6 where that shaft is in engagement with the piston nut 7; consequently relatively large pressurised areas are available on the end faces of the piston nut in the chambers 8 and 9 in relation to the diameter of the cylinder 3. Although the bell shaped mouth 22 of the worm shaft extends axially into the cylinder 3, this protrusion is insufficient to adversely affect the pressurised areas on the end faces of the piston and may be accommodated within a complementary recess 22a in the adjacent end face of the piston nut 7 to ensure that the piston nut can exhibit a relatively long stroke within its cylinder 3.

The end wall 4 of the cylinder 3 is shown as a cap secured as part of the housing 2 while the end wall 5 is an integral part of the housing. If required however the end wall 5 can also be formed as a cap which is secured as part of the housing.

0154388

- 21 -

CLAIMS

1.    A power assisted steering assembly for a motor vehicle steering system having two hydraulically operated power assistance motors and which assembly comprises one of said power assistance motors; valve means controlling fluid flow to said one power assistance motor and for connection to control fluid flow to the second power assistance motor when the assembly is installed in the steering system, the valve means having two sets of simultaneously adjustable ports with the ports in one set controlling fluid flow to control the power assistance provided from the one power assistance motor and the ports in the second set controlling the power assistance which is to be provided by the second power assistance motor;  said one power assistance motor comprising a worm shaft extending axially between opposed end walls of a piston cylinder and a piston nut engaging said worm shaft in the cylinder to be driven axially by rotation of the shaft and forming with the cylinder opposed piston chambers to which fluid flow is controlled for power assistance by said one set of ports; said worm shaft being coupled through torsionally responsive means to an input shaft mounted in one of said end walls to be rotatable in response to rotation of the input shaft; and wherein the valve means has a once piece valve sleeve which is accommodated within the axial thickness of said one end wall and is coupled for rotation with the worm shaft, a valve rotor which is formed as a part of said input shaft and is received within the valve sleeve to be rotatable relative thereto to an extent determined by the torsionally responsive means, and the ports of said two sets are formed in the valve sleeve and in the rotor.

2. An assembly as claimed in claim 1 in which the diameter of the worm thread with which the piston nut engages is less than the external diameter of the sleeve.

- 23 -

0154388

3. An assembly as claimed in claim 2 in which the end of the worm shaft adjacent to the sleeve is diametrically enlarged for its coupling to the sleeve.

4. An assembly as claimed in claim 3 in which the said end of the worm shaft is bell shaped for coupling to the sleeve and to accommodate an end of the rotor.

5. An assembly as claimed in either claim 3 or claim 4 in which the diametrically enlarged end of the worm shaft projects axially into the piston cylinder and the piston nut has a recess in a side face thereof within which said enlargement can be accommodated during a stroke of the piston nut in its cylinder without reducing the effective pressurised areas of the piston nut as determined by the diameter of the worm thread and of the piston cylinder.

6.    A motor vehicle steering system which incorporates a power assisted steering assembly as claimed in any one of claims 1 to 5 and comprising fluid pressure supply means to said valve means;   a steering output member connected with the piston nut and displaceable in response to displacement of that nut to effect movement of a steering linkage, and a second power assistance motor coupled to assist in movement of the steering linkage, said second motor having fluid flow thereto controlled for power assistance by the second set of ports in the valve means.

European Patent
Office

**EUROPEAN SEARCH REPORT**

0154388

Application number

EP 85 30 0234

## DOCUMENTS CONSIDERED TO BE RELEVANT

| Category | Citation of document with indication. where appropriate, of relevant passages | Relevant to claim | CLASSIFICATION OF THE APPLICATION (Int. Cl.4) |
|---|---|---|---|
| X | DE-B-2 719 926 (ZAHNRADFABRIK FRIEDRICHSHAFEN) <br> * Column 2, lines 9-35; claim 1; figures 1,4 * | 1-6 | B 62 D 5/30 <br> B 62 D 5/24 |
| D,X | GB-A-2 049 585 (ZAHNRADFABRIK FRIEDRICHSHAFEN) <br> * Abstract; figure 1 * | 1,6 | |
| D,A | GB-A-1 603 198 (CAM GEARS) <br> * Figure 1 * | 2-5 | |
| A | DE-B-1 655 927 (ZAHNRADFABRIK FRIEDRICHSHAFEN) | | |
| A | US-A-3 826 328 (SHEPPARD) | | TECHNICAL FIELDS SEARCHED (Int. Cl.4) |
| | ----- | | B 62 D 5/00 |

The present search report has been drawn up for all claims

| Place of search <br> BERLIN | Date of completion of the search <br> 29-04-1985 | Examiner <br> KRIEGER P O |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03 82